# EUROPÄISCHE PATENTSCHRIFT

(11) **EP 2 800 699 B1**
(45) Veröffentlichungstag und Bekanntmachung des Hinweises auf die Patenterteilung: **06.01.2016**
(21) Anmeldenummer: 13700034.5
(22) Anmeldetag: 07.01.2013
(51) Int. Cl.: B65B 59/04, B65B 61/06, B65B 9/04

(54) **VERPACKUNGSMASCHINE MIT EINER SCHNEIDSTATION**
PACKAGING MACHINE HAVING A CUTTING STATION
MACHINE D'EMBALLAGE AVEC POSTE DE DÉCOUPE

(30) Priorität: 06.01.2012 DE 102012000127
(43) Veröffentlichungstag der Anmeldung: 12.11.2014
(60) Teilanmeldung: 15192750.6
(73) Patentinhaber: GEA Food Solutions Germany GmbH, 35216 Biedenkopf-Wallau (DE)
(72) Erfinder: STEFFEN, Andreas, 35116 Hatzfeld-Holzhausen (DE); FEISEL, Jörg, 35216 Biedenkopf-Weifenbach (DE)
(74) Vertreter: Wolff, Felix
(86) Internationale Anmeldenummer: PCT/EP2013/050159
(87) Internationale Veröffentlichungsnummer: WO 2013/102682

(56) Entgegenhaltungen:
- EP-A1- 2 033 764
- EP-A1- 2 522 581
- DE-A1- 3 118 946
- DE-A1- 19 820 408
- DE-A1-102005 039 690

## Beschreibung

Die vorliegende Erfindung betrifft eine Verpackungsmaschine gemäß dem Oberbegriff des Patentanspruchs 1.

Eine gattungsgemäße Verpackungsmaschine ist beispielsweise in der DE 31 18 946 A1 beschrieben.

Derartige Verpackungsmaschinen sind aus dem Stand der Technik hinlänglich bekannt und werden beispielsweise als sogenannte Form-Fill-Seal- Verpackungsmaschinen (FFS-Verpackungsmaschinen) bezeichnet. Bei diesen Verpackungsmaschinen wird beispielsweise in eine Unterfolienbahn eine Verpackungsmulde, beispielsweise durch Tiefziehen, eingeformt, sodann mit einem Verpackungsgut befüllt und dann mit einer Deckelfolie verschlossen. Die so fertiggestellte Verpackung wird abschließend vereinzelt, indem sie aus mindestens einer Folienbahn ausgeschnitten wird. Vorzugsweise handelt es sich dabei um einen sogenannten Konturschnitt, bei dem mit einem Schneidmittel die gesamte Kontur der Verpackung von der Folienbahn abgelöst wird. Vorzugsweise arbeiten diese Verpackungsmaschinen taktweise, d. h. die Folienbahn/en wird/werden taktweise jeweils um eine sogenannte Vorschublänge weitertransportiert. Dabei wird in der Regel eine Vielzahl von Verpackungen gleichzeitig hergestellt, die in einem Format, das aus mehreren Spalten und/oder mehreren Reihen besteht, angeordnet sind. Die Verpackungen eines derartigen Formates werden immer gleichzeitig bearbeitet.

Verpackungsmaschinen müssen heutzutage sehr flexibel einsetzbar sein, d. h. es muss eine Vielzahl von unterschiedlichen Verpackungen in unterschiedlichen Formaten mit ihnen herstellbar sein. Da für die jeweilige Verpackung und/oder das jeweilige Format unterschiedliche Werkzeuge benötigt werden, müssen diese für die Herstellung unterschiedlicher Verpackungen gewechselt werden. Um die Stillstandzeiten der erfindungsgemäßen Verpackungsmaschinen möglichst gering zu halten, muss dieser Werkzeugwechsel möglichst schnell erfolgen.

Es war deshalb die Aufgabe der vorliegenden Erfindung, eine Verpackungsmaschine mit einer Schneidstation zur Verfügung zu stellen, bei der der Werkzeugwechsel schneller als bei Maschinen gemäß dem Stand der Technik erfolgen kann.

Gelöst wird die Aufgabe mit einer Verpackungsmaschine, welche die Merkmale des Patentanspruchs 1 aufweist.

Die vorliegende Erfindung betrifft eine Verpackungsmaschine mit einer Schneidstation. Bei einer derartigen Verpackungsmaschine handelt es sich beispielsweise um eine sogenannte Form-Fill-Seal- Verpackungsmaschine (FFS-Verpackungsmaschine), bei der in eine Unterfolie eine Verpackungsmulde eingeformt wird, die mit einem Verpackungsgut befüllt und anschließend mit einer Deckelfolie verschlossen wird. Die so fertiggestellte Verpackung muss abschließend mit der Schneidstation aus der Unterfolie und/oder der Deckelfolie vereinzelt, d.h. ausgeschnitten werden.

Derartige Verpackungsmaschinen arbeiten taktweise, d. h. die jeweilige Folienbahn wird intermittierend um eine sogenannte Vorschublänge entlang der Verpackungsmaschine transportiert. Dabei werden in der Regel eine Vielzahl von Verpackungen, ein sogenanntes Format, das aus einer Vielzahl von Reihen und/oder Spalten besteht, gleichzeitig hergestellt. Jede dieser Verpackungen muss vereinzelt werden.

Die Schneidstation weist ein Schneidmittel, das in der Regel mit einer Schneidklinge versehen ist und ein Gegenmittel, das vorzugsweise scherenartig mit dem Schneidmittel zusammenwirkt und das in der Regel ein Mittel aufweist, um die Folienbahn vor und/oder während des Schnitts einzuspannen, auf, oder ein Schneidmittel, das in der Regel mit einer gezahnten Schneidklinge versehen ist, das selbstschneidend wirkt und ein Gegenmittel, das vorzugsweise die Folienbahn einspannt. Das Einspannen der Folienbahn vor und/oder während des Schnitts dient üblicherweise mindestens zum Ermöglichen und/oder Verbessern der Schneidwirkung des Schneidmittels. Das Schneidmittel und das Gegenmittel haben dabei vorzugsweise die Form der Kontur der Verpackung, die aus der Folienbahn ausgeschnitten werden soll und/oder das Schneidmittel bewegt sich entlang einer vorgegebenen Kontur, die der Kontur der gewünschten Verpackung entspricht. Erfindungsgemäß werden zum Ausschneiden der Verpackung aus der jeweiligen Folienbahn das Schneidmittel und das Gegenmittel mit mindestens einem, vorzugsweise mehreren, Antrieben so lange aufeinander zu bewegt, bis die jeweilige Verpackung ausgeschnitten ist. Erfindungsgemäß ist nun vorgesehen, dass der Antrieb vorzugsweise neben der Folienbahn vorgesehen ist. Dadurch ist der Bereich, in dem sich die Folienbahn entlang der Verpackungsmaschine bewegt, frei zugänglich und kann für einen Werkzeugwechsel genutzt werden, so dass dieser wesentlich schneller erfolgen kann als dies bisher möglich war. Der Fachmann versteht, dass der Antrieb auch anders oder zusätzlich, beispielsweise oberhalb der Folienbahn und/oder stromaufwärts bzw. stromabwärts von dem auszuschneidenden Format angeordnet sein kann, sofern der Bereich, in dem sich die Folienbahn entlang der Verpackungsmaschine bewegt, ausreichend frei zugänglich ist und für einen Werkzeugwechsel genutzt werden kann, der wesentlich schneller erfolgen kann, als dies bisher möglich war.

Gemäß einem bevorzugten Gegenstand der vorliegenden Erfindung ist das Schneidmittel und/oder das Gegenmittel jeweils an einem beweglichen Rahmen befestigt. Diese rahmenartige Befestigung erlaubt ebenfalls einen sehr schnellen und einfachen Werkzeugwechsel. Das jeweilige Werkzeug liegt dabei vorzugsweise zumindest teilweise auf einer horizontalen Fläche des jeweiligen Rahmens auf. Zum Schneiden werden die Rahmen relativ zueinander bewegt.

Vorzugsweise weist mindestens ein Rahmen einen freien Querschnitt auf, der im Wesentlichen mindestens dem zu bearbeitenden Format entspricht. Vorzugsweise ist der freie Querschnitt des Rahmens so groß vorgesehen, dass sein freier Querschnitt dem Umfang des größten auf der erfindungsgemäßen Verpackungsmaschine zu verarbeitenden Formats entspricht. Jeder Rahmen kann an der Schneidstation austauschbar angeordnet sein. Vorzugsweise ist jeder Rahmen zumindest teilweise aus Profilen, insbesondere geschlossenen Profilen, beispielsweise Rechteckprofilen, hergestellt.

Weiterhin bevorzugt sind das Schneidmittel und/oder das Gegenmittel verschieblich an einem Maschinenrahmen angeordnet, der einen freien Querschnitt aufweist, der im Wesentlichen mindestens dem zu bearbeitenden Format entspricht. Vorzugsweise ist der freie Querschnitt dieses Rahmens so groß vorgesehen, dass er dem Umfang des größten auf der erfindungsgemäßen Verpackungsmaschine zu verarbeitenden Formats entspricht. Der Rahmen kann an der Verpackungsmaschine austauschbar angeordnet sein. Vorzugsweise ist der Rahmen zumindest teilweise aus Profilen, insbesondere geschlossenen Profilen, beispielsweise Rechteckprofilen, hergestellt.

Weiterhin weist die Schneidstation ein Ausstoßmittel auf, das die jeweils vereinzelte Verpackung aus der jeweiligen Folienbahn ausstößt und/oder das die jeweils ausgeschnittene Verpackung auf einem Transportmittel, beispielsweise einem Förderband, ablegt. Vorzugsweise ist pro auszuschneidender Verpackung ein Ausstoßmittel vorgesehen. Besonders bevorzugt wird dieses Ausstoßmittel an dem oberen Rahmen angeordnet. Weiterhin bevorzugt weist jedes Ausstoßmittel einen Druckluft- und/oder Vakuumanschluss auf. Besonders bevorzugt erfolgt dieser Druckluft- bzw. Vakuumanschluss jeweils über eine Verteilerplatte, die mit mindestens einer Druckluft- bzw. Vakuumquelle verbunden ist. Dadurch kann auf Verbindungsschläuche zwischen der Quelle und dem jeweiligen Ausstoßmittel verzichtet werden. Diese Verteilerplatte verfügt über eine Vielzahl von Ausnehmungen, beispielsweise Bohrungen, die die jeweilige Quelle mit dem jeweiligen Ausstoßmittel verbindet. Vorzugsweise sind in diesen Ausnehmungen Ventile vorgesehen, um die jeweilige Menge an Druckluft und/oder den Unterdruck zu steuern oder zu regeln.

Vorzugsweise weist das Ausstoßmittel eine Venturi-Düse auf, mit der ein Unterdruck erzeugt werden kann. Mit diesem Unterdruck kann das Ausstoßmittel reversibel mit der jeweils zu vereinzelnden Verpackung verbunden werden, um diese nach dem Ausschneiden beispielsweise auf einem Transportmittel abzusetzen.

Vorzugsweise ist an dem Ausstoßmittel eine elastische Dichtung vorgesehen, die dichtend mit dem anzusaugenden und/oder auszustoßenden Produkt zusammenwirkt. Besonders bevorzugt ist diese Dichtung ein PUR-Schaumstoff, ganz besonders bevorzugt mit geschlossenen Poren.

Vorzugsweise ist die Dichtung als geschlossene ringförmige Fläche ausgebildet, wobei der Ring ein Kreisring sein kann aber nicht sein muss

Vorzugsweise ist die Dichtung so ausgebildet, dass ihre Form der anzusaugenden Fläche zumindest abschnittsweise folgt.

Ein weiterer bevorzugter Gegenstand der vorliegenden Erfindung ist eine Verpackungsmaschine, bei der eine Folienbahn zumindest zeitweise zwischen zwei Klemmflächen geklemmt wird. Diese Klemmung kann beispielsweise im Bereich der Formstation, in der eine Verpackungsmulde in die Unterfolienbahn geformt wird, in der Siegelstation, in der eine Deckelfolie an die Unterfolienbahn gesiegelt wird und/oder in der Schneidstation, in der die jeweiligen Verpackungen vereinzelt werden, erforderlich sein, um zu verhindern, dass die jeweilige Folienbahn unerwünschterweise verrutscht und/oder um die Folienbahn einzuspannen und die Schneidwirkung der Schneidstation zu ermöglichen und/oder zu verbessern. Dabei ist eine Klemmfläche oberhalb und eine Klemmfläche unterhalb der jeweiligen Folienbahn angeordnet, die zum Klemmen aufeinander zu bewegt werden. Bevorzugt ist mindestens eine dieser Klemmflächen zumindest abschnittsweise strukturiert, besonders bevorzugt sind jedoch beide dieser Klemmflächen zumindest abschnittsweise strukturiert, insbesondere sind diese Klemmflächen mit einer pyramidenartigen Struktur versehen. Dadurch wird eine besonders gute Klemmwirkung zwischen den Klemmflächen erzielt. Vorzugsweise ist die Struktur der beiden klemmend zusammenwirkenden Klemmflächen versetzt, insbesondere so versetzt, dass die Spitze einer Pyramide einer Klemmfläche in den Zwischenraum zwischen mindestens zwei Pyramiden der anderen Klemmfläche eingreift.

Ein weiterer Gegenstand der vorliegenden Erfindung ist ein Verfahren zum Wechseln eines Schneidwerkzeuges einer Schneidstation, bei dem das Schneidmittel und/oder das Gegenmittel und/oder das Ausstoßmittel in oder gegen die Laufrichtung der Folienbahn jeweils aus einem Rahmen einer Schneidstation gezogen oder geschoben wird.

Die zu den erfindungsgemäßen Verpackungsmaschinen gemachten Ausführungen gelten für das erfindungsgemäße Verfahren gleichermaßen und umgekehrt.

Dadurch, dass das Schneidmittel, das Gegenmittel und/oder das Ausstoßmittel in oder gegen die Laufrichtung der Folienbahn der Folienbahn jeweils aus dem Rahmen einer Schneidstation gezogen werden, ist ein besonders einfacher, platzsparender Werkzeugwechsel möglich.

Vorzugsweise wird ein gegebenenfalls vorhandenes Ausstoßmittel von oben auf den oberen Rahmen aufgelegt und dort fixiert. Vorzugsweise erfolgt der Werkzeugwechsel mit sehr einfachen Mitteln, vorzugsweise werkzeugfrei.

Im Folgenden werden die Erfindungen anhand der Figuren 1 - 5c erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Schneidstation.
- **Figur 2**: zeigt den Werkzeugwechsel bei der erfindungsgemäßen Schneidstation.
- **Figuren 3a** - **3c**: zeigen das Vereinzeln der Verpackungen aus der Verpackungsfolie.
- **Figur 4**: zeigt Details der Klemmflächen.
- **Figur 5**: zeigt eine Ausführungsform des Ausstoßmittels

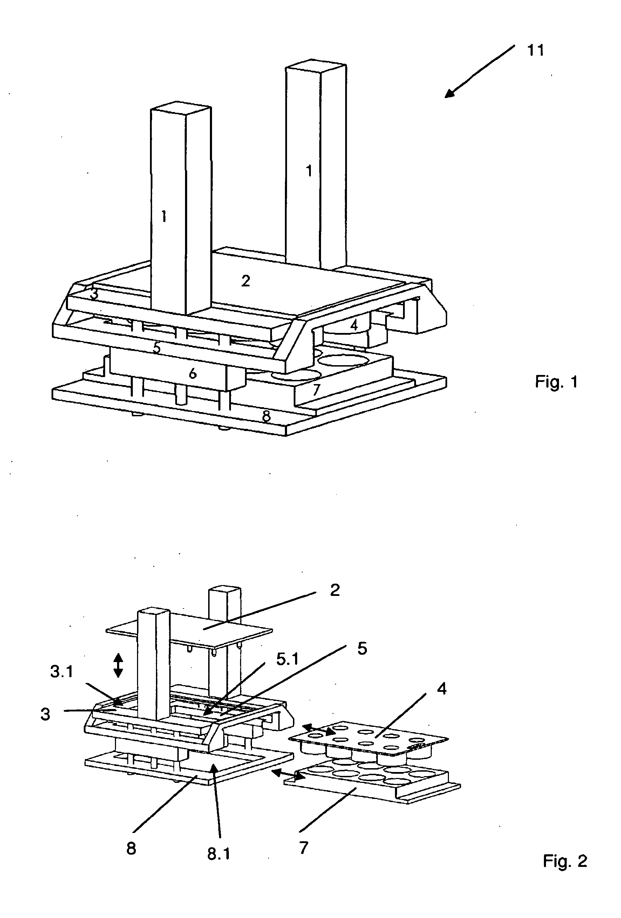

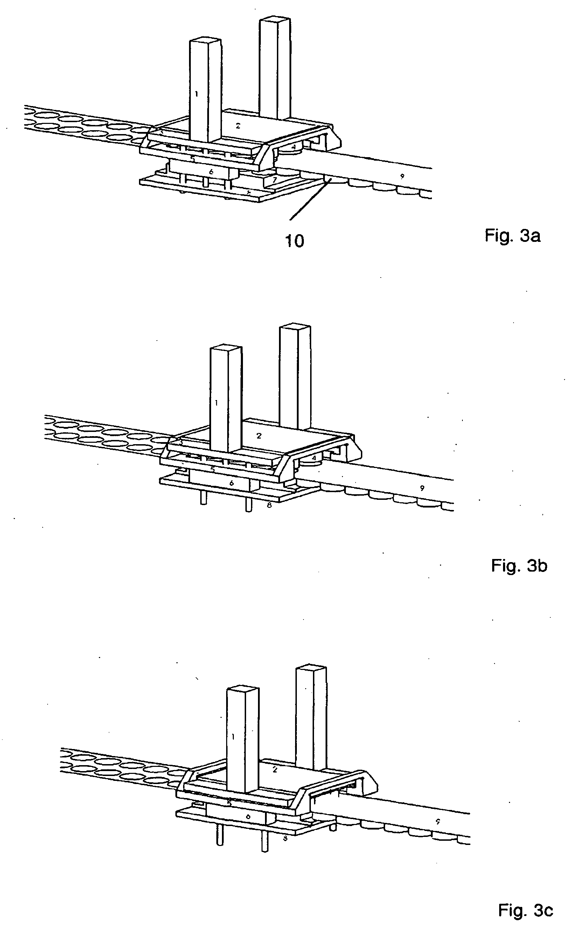

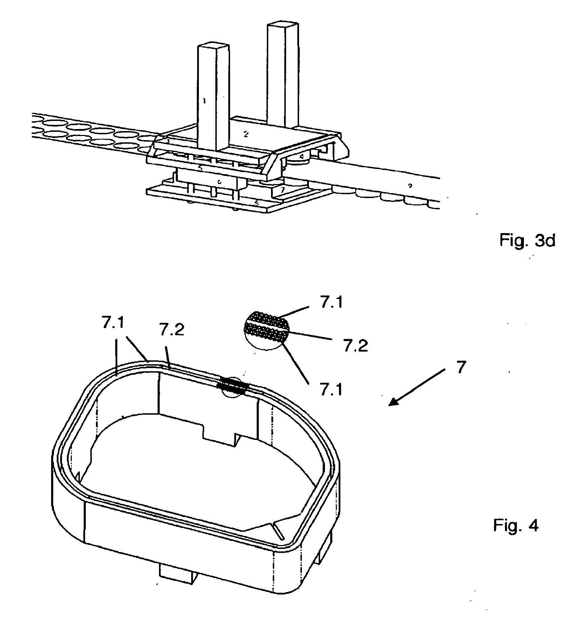

Figur 1 zeigt die Schneidstation 11 der erfindungsgemäßen Verpackungsmaschine. Diese Verpackungsmaschine weist vorzugsweise eine Formstation, in der in eine sogenannte Unterfolienbahn eine Verpackungsmulde eingeformt wird, eine Füllstation, in der mindestens ein Verpackungsgut in die hergestellte Verpackungsmulde der Unterfolienbahn eingefüllt wird und eine Siegelstation, in der auf die befüllte Verpackungsmulde eine Deckelfolie gesiegelt wird, auf. Stromabwärts der Siegelstation befindet sich die Schneidstation, die die fertiggestellte Verpackung aus der Unter- und/oder Oberfolienbahn vereinzelt. Die erfindungsgemäße Verpackungsmaschine arbeite taktweise, d. h. bei jedem Takt wird die jeweilige Folienbahn um eine bestimmte Vorschublänge entlang der Verpackungsmaschine weitertransportiert. Zur Bearbeitung der jeweiligen Folienbahn steht diese vorzugsweise still. Bei jedem Arbeitsschritt werden vorzugsweise eine Vielzahl von Verpackungen, die vorzugsweise in einem sogenannten Format, das aus mehreren Spalten und/oder mehreren Reihen besteht, gleichzeitig hergestellt, indem der jeweilige Bearbeitungsschritt zur Herstellung der jeweiligen Verpackung jeweils gleichzeitig erfolgt. Während der jeweiligen Bearbeitung der jeweiligen Folienbahn steht diese vorzugsweise still. Die Schneidstation 11 weist einen ortsfesten Maschinenrahmen auf, der vorzugsweise rechts und links an dem Maschinenrahmen der Verpackungsmaschine ortsfest gelagert ist. An diesem Maschinenrahmen ist, insbesondere vertikal verschieblich, ein erster, hier oberer, Rahmen 3 und/oder ein zweiter, hier unterer, Rahmen 8 vorgesehen. Zum Schneiden wird mindestens einer der beiden Rahmen 3, 8 relativ zu dem anderen Rahmen 3, 8 von einer von der Folienbahn beabstandeten Position in eine Schneidposition bewegt. Vorzugsweise weist mindestens ein Rahmen 3 ein Mittel, beispielsweise ein Federmittel, auf, das ihn in seine von der Folie beabstandete Position vorspannt. Der andere Rahmen 8 wird vorzugsweise durch Schwerkraft in seiner beabstandeten Position gehalten. Zum Bewegen der beiden Rahmen aufeinander zu und/oder voneinander weg weist die Schneidstation mindestens ein, hier zwei, Antriebsmittel, vorzugsweise einen Zylinder, insbesondere einen Hochkraftzylinder, auf. Dieses Antriebsmittel ist, wie insbesondere Figur 3a entnommen werden kann, vorzugsweise rechts und links von der Folienbahn angeordnet und blockiert somit nicht den Bereich unter oder über der Folienbahn, so dass dieser, beispielsweise für einen Werkzeugwechsel, zur Verfügung steht. An dem ersten, hier dem oberen, Rahmen 3 ist ein Schneidmittel 4 angeordnet, das eine Vielzahl von Schneiden aufweist, die die jeweilige Verpackung aus der jeweiligen Folienbahn vereinzelt. Bei der Schneide kann es sich um eine geschlossene, ortsfeste Klinge handeln. Diese Klinge hat in der Regel eine in vorzugsweise einer Ebene liegende Schneidspitze, die jedoch auch gezahnt sein kann. Die Schneide kann aber auch ein sogenannter Konturschneider sein, der sich zum Schneiden entlang einer vorgegebenen Kontur bewegt. An dem zweiten, hier dem unteren, Rahmen ist ein Gegenmittel, beispielsweise ein Gegenmesser oder eine Schneidbrille, angeordnet, mit der der Schneidvorgang ermöglicht und/oder verbessert wird. Das Gegenmittel wirkt beim Schneiden mit dem Schneidmittel zusammen. Das Gegenmittel meist in der Regel auch ein Mittel zum Einspannen der Folienbahn auf, mit dem der Schneidvorgang ermöglichst und/oder verbessert wird.

Figur 2 zeigt weitere Details der Schneidstation gemäß Figur 1 und einen Werkzeugwechsel. Insbesondere kann Figur 2 entnommen werden, dass mindestens ein Rahmen 3, 5, 8, hier alle Rahmen 3, 5, 8, einen freien Querschnitt 3.1, 5.1, 8.1 aufweisen, der mindestens dem jeweils herzustellenden, vorzugsweise dem maximal herstellbaren, Format entspricht. Das Schneidmittel 4 wird an dem oberen Rahmen befestigt, indem es durch eine Bewegung in oder gegen die Laufrichtung der Folienbahn in den ersten, hier oberen, Maschinenrahmen, insbesondere horizontal, eingeschoben wird und auf diesem aufliegt sowie dann dort, vorzugsweise werkzeugfrei, fixiert wird. Dasselbe gilt für das Gegenmittel, das ebenfalls in oder gegen die Laufrichtung der Folienbahn auf den zweiten, hier unteren, Maschinenrahmen, insbesondere horizontal aufgeschoben und dann dort, vorzugsweise werkzeugfrei, fixiert wird. Der Darstellung gemäß Figur 2 kann entnommen werden, dass sowohl das Schneidmittel 4 als auch das Gegenmittel 7 vorzugsweise eine Vielzahl von Schneiden bzw. Gegenmessern aufweist. Die Anzahl und Anordnung der Schneiden/Gegenmesser entspricht dabei dem jeweils zu verarbeitenden Format, das in dem vorliegenden Fall aus zwei Reihen und vier Spalten besteht. Sofern vorhanden, muss bei einem Formatwechsel in der Regel ebenfalls das Ausstoßmittel 2 ausgetauscht werden. Dieses wird vorzugsweise, wie durch den Doppelpfeil angedeutet, bei einem Werkzeugwechsel, hier vertikal, angehoben bzw. abgesenkt. Der Fachmann erkennt, dass bei der Schneidstation der erfindungsgemäßen Verpackungsmaschine der Werkzeugwechsel mit sehr einfachen Mitteln, vorzugsweise werkzeugfrei, und in sehr kurzer Zeit erfolgen kann. Gegebenenfalls muss für einen Werkzeugwechsel die Folienbahn nicht durchtrennt werden.

Die Figuren 3a - 3c zeigen das Ausschneiden der jeweiligen Verpackung aus der Folienbahn 9, wobei in der Darstellung die Folienbahn von rechts nach links durch die Schneidstation bewegt wird. Wie Figur 3a entnommen werden kann, befinden sich zunächst sowohl der erste Rahmen 3 als auch der zweite Rahmen 5 in einer von der Folienbahn 9 beabstandeten Position. Insbesondere der erste, hier der obere, Rahmen 5 wird in dieser Position durch ein Federmittel gehalten. Sodann bewegt ein Antriebsmittel, hier ein Zylinder, den zweiten Rahmen 8, wie durch die Pfeile dargestellt, hier nach oben, in seine Schneidposition (vgl. Figur 3b). Der erste Rahmen 3 verbleibt dabei in seiner von der Folienbahn beabstandeten Position. Anschließend bewegt sich der Antrieb 1 weiter, insbesondere fährt der Zylinder weiter ein, und zieht dabei den ersten Rahmen 3, wie durch den Pfeil dargestellt, hier gegen die Federkraft nach unten. Dabei wird ebenfalls das an dem Rahmen 3 vorgesehene Schneidmittel 4 nach unten bewegt und wirkt mit Gegenmitteln, die an dem ersten Rahmen 8 angeordnet sind, jeweils schneidend zusammen, so dass die jeweiligen Verpackungen vereinzelt werden. Die ausgeschnittenen Verpackungen werden dann nach unten durch den zweiten Rahmen 8 hindurch abgeführt. Dies kann durch ein Ausstoßen, beispielweise Ausblasen mittels Druckluft, die von dem Ausstoßmittel 2 ausströmt, erfolgen. Die Verpackungen können aber auch zunächst reversibel mit dem Ausstoßmittel, beispielsweise durch Unterdruck, verbunden und dann definiert, beispielsweise auf einem Transportmittel und/oder in einem weiteren Verpackungsmittel, abgesetzt werden. Anschließend oder gleichzeitig bewegt sich das Antriebsmittel in die entgegengesetzte Richtung, d. h. ein Zylinder fährt beispielsweise wieder auseinander und der erste und/oder der zweite Rahmen 3, 8 bewegen sich in die von der Verpackungsfolie beabstandete Position. Diese kann dann um eine weitere Vorschublänge weiter transportiert werden, bevor der nächste Schneidzyklus beginnt.

Figur 4 zeigt das erfindungsgemäße Klemmmittel, hier am Beispiel des Gegenmittels. Dieses Gegenmittel weist eine Klemmfläche 7.1 auf, die zumindest abschnittsweise strukturiert, hier pyramidenartig strukturiert, ist. Eine derartige strukturierte Fläche 7.1 befindet sich rechts und links einer Ausnehmung 7.2, hier einer um die gesamte Verpackung umlaufenden Nut, in die eine Schneide des Schneidmittels zum Vereinzeln der jeweiligen Verpackung eintaucht. Der Fachmann erkennt, dass an dem Schneidmittel ebenfalls mindestens eine Klemmfläche vorhanden ist, die klemmend mit der Klemmfläche 7.1 zusammenwirkt. Diese Klemmfläche ist vorzugsweise ebenfalls mindestens abschnittsweise strukturiert, insbesondere pyramidenartig strukturiert, ausgeführt, wobei die Pyramiden der jeweiligen klemmenden Flächen vorzugsweise so versetzt zueinander vorgesehen sind, dass die Spitze einer Pyramiden der einen Klemmfläche in den Zwischenraum zwischen mindestens zwei Pyramiden der anderen Klemmfläche eingreift.

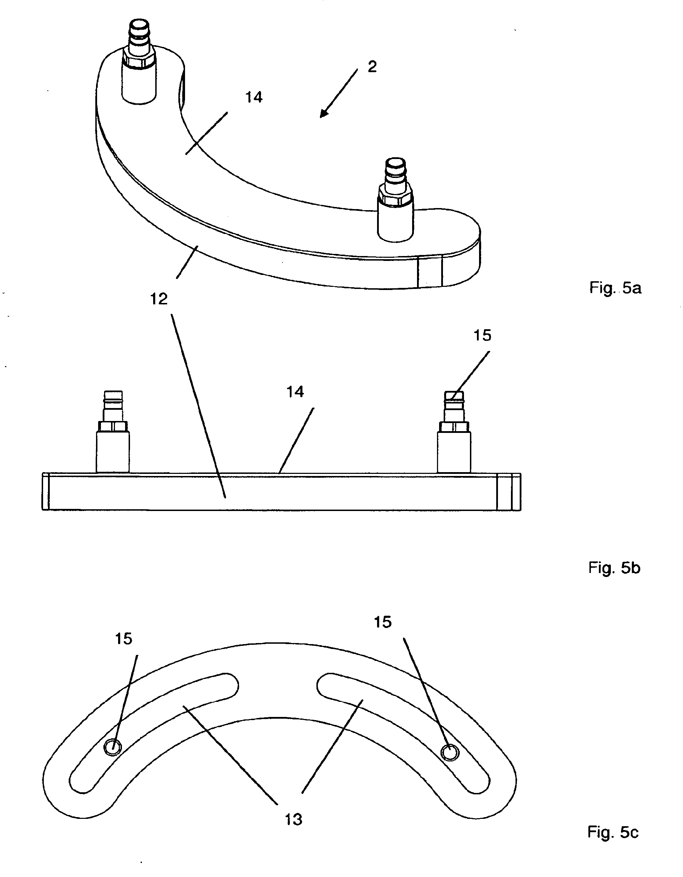

In Figur 5 ist eine mögliche Ausführungsform des Ausstoßmittels 2 dargestellt. Dieses weist ein Gehäuse 14, hier eine Platte, insbesondere eine Stahlplatte auf, mit einem Druck und/oder Saugmittelanschluss versehen ist. Außerdem ist an dem Gehäuse eine Dichtung 12 angeordnet, die dichtend mit dem anzusaugenden bzw. auszustoßenden Produkt zusammenwirkt. Die Dichtung ist vorzugsweise an das anzusaugende Produkt, hier eine Wurst, angepasst. Die Dichtung ist vorzugsweise zumindest teilweise ringförmig gestaltet, so dass sich eine oder mehrere Saug- und/oder Druckkammern 13 ausbilden. Vorzugsweise ist die Dichtung aus geschäumtem PUR-Material gefertigt, dass so elastisch ist, dass sich die Form der Dichtung in den Kontaktbereichen an die Form des Produkts anpasst.

### Bezugszeichenliste:

- 1: Antriebsmittel, Hochkraftzylinder
- 2: Ausstoßmittel
- 3: erster, oberer Rahmen
- 3.1: offener Querschnitt des oberen Rahmens
- 4: Schneidmittel
- 5: Maschinenrahmen, ortsfester Rahmen
- 5.1: offener Querschnitt des ortsfesten Rahmens
- 6: Anschlag
- 7: Gegenmittel, Gegenmesser, Schneidbrille
- 7.1: Klemmfläche, strukturierte Fläche
- 7.2: Ausnehmung, Nut
- 8: zweiter, unterer Rahmen
- 8.1: offener Querschnitt des unteren Rahmens
- 9: Folienbahn
- 10: Verpackung
- 11: Schneidstation
- 12: Dichtung
- 13: Vakuum- und/oder Druckkammer
- 14: Gehäuse
- 15: Saug- und/oder Druckmittelanschluss

## Patentansprüche

1. Verpackungsmaschine, die taktweise arbeitet, mit einer Schneidstation (11), mit der fertiggestellte Verpackungen aus mindestens einer Folienbahn (9) ausgeschnitten werden, indem ein Schneidmittel (4) und ein Gegenmittel (7) und gegebenenfalls ein Ausstoßmittel (2) mit mindestens einem Antrieb (1) aufeinander zu bewegt werden, **dadurch gekennzeichnet, dass** der Antrieb (1) neben dem auszuschneidenden Format, das aus einer Vielzahl von Reihen und einer Vielzahl von Spalten besteht, vorgesehen ist, so dass ein Wechsel des Schneidmittels und/oder des Ausstoßmittels (2) und/oder des Gegenmittel möglich ist.

2. Verpackungsmaschine nach Anspruch 1, **dadurch gekennzeichnet, dass** das Schneidmittel (4) und/oder das Gegenmittel (7) jeweils an einem beweglichen Rahmen (3, 8) befestigt ist.

3. Verpackungsmaschine nach Anspruch 2, **dadurch gekennzeichnet, dass** mindestens ein Rahmen (3, 5, 8) einen freien Querschnitt (3.1, 5.1, 8.1) aufweist, der im Wesentlichen mindestens dem auszuschneidenden Format entspricht.

4. Verpackungsmaschine nach einem der voranstehenden Ansprüche, **dadurch gekennzeichnet, dass** das Schneidmittel (4) und/oder das Gegenmittel (7) verschieblich an einem Maschinenrahmen angeordnet ist, der einen freien Querschnitt aufweist, der im Wesentlichen mindestens dem auszuschneidenden Format entspricht.

5. Verpackungsmaschine nach einem der voranstehenden Ansprüche, **dadurch gekennzeichnet, dass** die Schneidstation ein Ausstoßmittel (2) aufweist, das vorzugsweise an dem oberen Rahmen angeordnet ist, wobei vorzugsweise pro gleichzeitig auszuschneidende Verpackung jeweils ein Ausstoßmittel (2) vorgesehen ist.

6. Verpackungsmaschine nach Anspruch 5, **dadurch gekennzeichnet, dass** jedes Ausstoßmittel (2) einen Druckluft- und/oder Vakuumanschluss aufweist und dass der jeweils über eine Verteilerplatte mit mindestens einer Druckluft- bzw. Vakuumquelle verbunden ist.

7. Verpackungsmaschine nach einem der Ansprüche 5 oder 6, **dadurch gekennzeichnet, dass** das Ausstoßmittel eine Venturi-Düse als Saugmittel aufweist.

8. Verpackungsmaschine nach einem der Ansprüche 5 oder 6 oder 7, **dadurch gekennzeichnet, dass** an dem Ausstoßmittel (2) eine elastische Dichtung vorgesehen ist, die dichtend mit dem anzusaugenden und/oder auszustoßenden Produkt zusammenwirkt.

9. Verpackungsmaschine, nach einem der voranstehenden Ansprüche, bei der eine Folienbahn zumindest zeitweise zwischen zwei Klemmflächen geklemmt wird, **dadurch gekennzeichnet, dass** mindestens eine Klemmfläche jeweils mindestens abschnittsweise strukturiert ist, insbesondere eine pyramidenartige Struktur aufweist.

10. Verpackungsmaschine nach Anspruch 9, **dadurch gekennzeichnet, dass** die Struktur von zwei klemmend zusammenwirkenden Klemmflächen versetzt zueinander ist.

11. Verfahren zum Wechseln eines Schneidwerkzeuges einer Schneidstation, nach einem der voranstehenden Ansprüche, **dadurch gekennzeichnet, dass** das Schneidmittel (4) und/oder das Gegenmittel (7) und/oder das Ausstoßmittel (2) in oder gegen die Laufrichtung der Folienbahn (9) jeweils aus einem Rahmen (3, 8) gezogen oder geschoben wird.

## Claims

1. Packaging machine which operates in a cyclical manner, having a cutting station (11) with which completed items of packaging are cut out from at least one film web (9), in that a cutting means (4) and a counter means (7) and, if applicable, an ejections means (2) are moved toward one another by at least one drive (1), **characterized in that** the drive (1) is provided beside the format to be cut out, which consists of a multiplicity of rows and a multiplicity of columns, such that a change of the cutting means and/or of the ejection means (2) and/or of the counter means is possible.

2. Packaging machine according to Claim 1, **characterized in that** the cutting means (4) and/or the counter means (7) are/is in each case fastened on a movable frame (3, 8).

3. Packaging machine according to Claim 2, **characterized in that** at least one frame (3, 5, 8) has a free cross section (3.1, 5.1, 8.1) which substantially corresponds to at least the format to be cut out.

4. Packaging machine according to one of the preceding claims, **characterized in that** the cutting means (4) and/or the counter means (7) are displaceably located on a machine frame which has a free cross section which substantially corresponds to at least the format to be cut out.

5. Packaging machine according to one of the preceding claims, **characterized in that** the cutting station has an ejection means (2) which is preferably arranged on the upper frame, wherein preferably in each case one ejection means (2) is provided per item of packaging that is to be simultaneously cut out.

6. Packaging machine according to Claim 5, **characterized in that** each ejection means (2) has a compressed-air connector and/or vacuum connector and that said connector is in each case connected via a distributor plate to at least one compressed-air source and/or vacuum source.

7. Packaging machine according to one of Claims 5 and 6, **characterized in that** the ejection means, as a suction means, has a venturi nozzle.

8. Packaging machine according to one of Claims 5 and 6 and 7, **characterized in that** an elastic seal which interacts in a sealing manner with the product to be suctioned and/or to be ejected is provided on the ejection means (2).

9. Packaging machine according to one of the preceding claims, in which a film web, at least at times, is clamped between two clamping faces, **characterized in that** at least one clamping face, at least in portions, is structured in each case, in particular has a pyramid-like structure.

10. Packaging machine according to Claim 9, **characterized in that** the structure of two clamping faces that interact in clamping manner is a mutually offset one.

11. Method for changing a cutting tool of a cutting station, according to one of the preceding claims, **characterized in that** the cutting means (4) and/or the counter means (7) and/or the ejection means (2) are in each case pulled or pushed from a frame (3, 8) in or counter to the running direction of the film web (9).

## Revendications

1. Machine d'emballage, qui fonctionne en cadence, avec un poste de découpe (11) à l'aide duquel des emballages achevés sont découpés dans au moins une bande de film (9), en ce qu'un moyen de découpe (4) et un moyen antagoniste (7) et le cas échéant un moyen d'expulsion (2) sont déplacés l'un vers l'autre avec au moins un entraînement (1), **caractérisée en ce que** l'entraînement (1) est prévu à côté du format à marquer, qui est constitué d'une pluralité de rangées et d'une pluralité de colonnes, de sorte qu'un changement du moyen de découpe et/ou du moyen d'expulsion (2) et/ou du moyen antagoniste est possible.

2. Machine d'emballage selon la revendication 1, **caractérisée en ce que** le moyen de découpe (4) et/ou le moyen antagoniste (7) sont fixés chacun sur un cadre (3, 8) mobile.

3. Machine d'emballage selon la revendication 2, **caractérisée en ce qu'**au moins un cadre (3, 5, 8) comporte une section transversale (3.1, 5.1, 8.1) libre qui correspond sensiblement au moins au format à marquer.

4. Machine d'emballage selon l'une quelconque des revendications précédentes, **caractérisée en ce que** le moyen de découpe (4) et/ou le moyen antagoniste (7) est/sont placé(s) de manière déplaçable sur un cadre de la machine qui comporte une section transversale libre, qui correspond sensiblement au moins au format à marquer.

5. Machine d'emballage selon l'une quelconque des revendications précédentes, **caractérisée en ce que** le poste de découpe comporte un moyen d'expulsion (2) qui est placé de préférence sur le cadre supérieur, de préférence chaque fois un moyen d'expulsion (2) étant prévu par emballage qui doit être découpé simultanément.

6. Machine d'emballage selon la revendication 5, **caractérisée en ce que** chaque moyen d'expulsion (2) comporte un raccord d'air comprimé et/ou un raccord sur le vide et **en ce que** ce dernier est relié chaque fois par l'intermédiaire d'une plaque de distribution avec au moins une source d'air comprimé ou une source de vide.

7. Machine d'emballage selon l'une quelconque des revendications 5 et 6, **caractérisée en ce que** le moyen d'expulsion comporte un tube de Venturi en tant que moyen d'expulsion.

8. Machine d'emballage selon l'une quelconque des revendications 5, 6 et 7, **caractérisée en ce que** sur le moyen d'expulsion (2), il est prévu un joint élastique, qui interagit en assurant l'étanchéité avec le produit qui doit être aspiré et/ou expulsé.

9. Machine d'emballage selon l'une quelconque des revendications précédentes, sur laquelle une bande de film est serrée au moins temporairement entre deux surfaces de serrage, **caractérisée en ce qu'**au moins une surface de serrage est chaque fois structurée au moins par sections, et comporte notamment une structure pyramidale.

10. Machine d'emballage selon la revendication 9, **caractérisée en ce que** la structure est constituée par deux surfaces de serrage interagissant par serrage, déportées l'une par rapport à l'autre.

11. Procédé destiné à remplacer un outil de découpe sur un poste de découpe selon l'une quelconque des revendications précédentes, **caractérisé en ce que** le moyen de découpe (4) et/ou le moyen antagoniste (7) et/ou le moyen d'expulsion (2) est/sont tiré(s) ou poussé(s) dans ou à l'encontre de la direction de déplacement de la bande de film (9), chaque fois hors d'un cadre (3, 8).
